(19) **Europäisches Patentamt**

**European Patent Office**

**Office européen des brevets**

(11) **EP 1 221 631 A1**

(12) **EUROPEAN PATENT APPLICATION**

(43) Date of publication:
**10.07.2002 Bulletin 2002/28**

(51) Int Cl.7: **G02B 27/14**, H04N 1/028, G01T 1/20

(21) Application number: **01000001.6**

(22) Date of filing: **09.01.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (71) Applicant: **AGFA-GEVAERT**<br>**2640 Mortsel (BE)**<br><br>(72) Inventor: **Cresens, Marc**<br>**2640, Mortsel (BE)** |

(54) **High efficient light guiding means**

(57) A light guide 7 comprises an optical cavity consisting of an optical material. The cavity is provided with an area 30 reflecting light of a first wavelength and transmitting light of a second wavelength. A read out apparatus for reading an image that has been stored in a photostimulable phosphor screen incorporating such a light guide 7 has been described.

*FIG. 2*

EP 1 221 631 A1

**Description**

FIELD OF THE INVENTION

The present invention relates to read out of a radiographic image that has been stored in a photostimulable phosphor screen.

The invention more particularly relates to high efficiency light guiding for use in a system for reading a radiation image out of a photostimulable phosphor screen.

BACKGROUND OF THE INVENTION

An X-ray image that has been temporarily stored in a photostimulable phosphor medium can be read out in a radiography read out system (CR read out system). In such a system the photostimulable phosphor screen is scanned by means of light within the stimulating wavelength range of the phosphor. Upon stimulation the phosphor emits light within a second wavelength range. The light emitted upon stimulation is guided by light guiding means onto a detector and is converted into a (digital) signal representation of the radiation image.

In such a system it is very important to utilise the light which is emitted by the phosphor upon stimulation efficiently in order to preserve the intrinsic raw image quality.

Image quality and diagnostic value are closely related. The amount of emission light which is collected determines the noise and hence influences image quality. The disturbing photon-noise component (Poisson distribution) in the detected image signal is inversely proportional to the root of the number of collected emission photons that reach the detector. The emission light depends on the radiation dose to which a patient is exposed. It is important that the radiation dose can be kept low. Therefore it is essential during scanning of the medium in which the radiation image has been stored to consider efficiency of light collection when handling these precious information-carrying emission photons to preserve image quality at low dose.

The Detection Quantum Efficiency (DQE), the pre-eminent parameter for characterising the detection performance of a CR system, increases in direct proportion to the optical efficiency with which the liberated photons are intercepted by light guiding means and transported to the detector. It is thus important to optimise the optical efficiency of the CR system and more particularly of the light collecting and guiding means.

Phosphor storage media scatter the liberated stimulated emission light according to an extremely diffuse quasi-Lambert radiation pattern. The greatest intensity is observed perpendicular to the radiating surface. The radiation intensity falls from a maximum value to zero according to a quasi-cosine relationship as the angle between the radiating direction and the normal to the phosphor storage medium increases.

The light guide must therefore subtend as large a solid angle as possible around the stimulated emission point to capture this extremely scattered emission light as efficiently as possible. Usually, this is done by placing light collecting and light guiding means such as reflectors, optical fibre bundles or strip light-guides as close as possible to the surface of the storage medium. These components intercept the emission light and guide the collected photons via a spectral filter to a light-sensitive detector which converts them into photoelectrons.

U.S. Patent 4,824,194 Fuji Photo Film Co. discloses the use of a strip-like light-guide and a reflector to guide the light onto the detector. A large portion of the valuable emission photons are wasted due to an entrance feature introduced in the collector cavity to provide the stimulation beam access to the storage medium to be scanned.

This aperture or slit is positioned close to the emission point and must provide sufficient clearance for passing the laser beam, allowing for sufficient lateral tolerance and adjustment possibilities, thus causing a spatial region considerable for gathering precious emission photons to be lost.

Preferably, the incident direction of the stimulation beam deviates little from the surface normal in order to limit lateral scan-line distortion caused by any unevenness of the storage medium. The entrance feature is located with respect to the stimulation point in what is, for the detection, the most interesting high-energy region of the radiating pattern.

Photon loss and the resulting reduction of collection efficiency quickly amount to in between 20 to 30 percent of the total quantity of emission photons effectively captured.

In addition, although being highly reflective to emission light, the reflectors in the collector cavity, which are conventionally used to redirect intercepted photons towards the detector, exhibit reflection losses that quickly amount to in between 5 to 15 percent.

OBJECTS OF THE INVENTION

It is an object of the present invention to provide an optically efficient light guide that overcomes the drawbacks of the prior art light guides.

It is a further object of the present invention to provide an apparatus for reading a radiation image that has been stored in a photostimulable phosphor screen wherein the efficiency of the collection of the light emitted by the phosphor screen upon stimulation is optimised.

Further objects will become apparent from the description hereafter.

SUMMARY OF THE INVENTION

The above mentioned objects are realised by a light guiding means as set out in claim 1.

The light guiding means according to the present invention comprises a light guiding optical cavity consisting of at least one block of optical material the refractive index of which is higher than that of the medium surrounding it. The block of optical material comprises an area that reflects light of a first wavelength and transmits light of a second wavelength.

In the context of the present invention an optical cavity consists of a 3-dimensional spatially delineated block of optical material wherein light is captured and reflected and refracted.

In the context of the present invention wavelength means a single wavelength as well as a range of wavelengths.

The medium surrounding the optical cavity is in most cases air. Other low refractive index gases or coating materials (solid or fluid) are possible too.

The present invention is advantageous in that a light guiding means according to the present invention permits detection of emission photons within the stimulation angle. Furthermore, loss of reflection efficiency by reflectors or the like is avoided.

In one embodiment of the light guiding means of the present invention the optical cavity comprises at least two blocks of optical materials guiding light of a first and a second wavelength, each of said blocks having a refractive index that is higher than that of the medium surrounding the cavity. Each of the blocks has a bevelled side and the blocks are optically adhered to eachother by the bevelled sides. Part of the area of interface between the two blocks reflects a first wavelength and transmits a second wavelength.

In another embodiment a single block of optical material is provided. The block has a bevelled outer side. At least part of the outer side reflects light of a first wavelength and transmits light of a second wavelength.

The bevelled side in these embodiments may be partially provided with a coating reflecting light of a first wavelength and transmitting light of a second wavelength.

Alternatives for the coated bevelled side are possible and are set out in the detailed description of the drawings.

An alternative light guiding means comprises a block of optical material. An entry part composed of an optical material that guides light of a first wavelength is adhered to the outer face of the block of optical material and is arranged for guiding the light of the first wavelength entering the entry part towards the block of optical material. At least part of the area of interface between the entry part and the block transmits light of the first wavelength and reflects light of the second wavelength.

Another aspect of this invention relates to an apparatus for reading a radiation image that has been stored in a photostimulable phosphor screen comprising a light guide according to the present invention.

The light of the first wavelength is in such an application light within the stimulating wavelength range whereas light of the second wavelength is light emitted by the photostimulable phosphor upon stimulation.

Specific features for preferred embodiments of the invention are set out in the dependent claims.

In the following several alternative solutions according to the present invention are described. Several embodiments of light guiding means will be described in the context of stimulation of a photostimulable phosphor screen and detection of the image-wise modulated emission by that screen upon stimulation.

It is evident that this particular application is described for illustrative purpose and that the light guide of the present invention is not limited to this specific application.

BRIEF DESCRIPTION OF THE DRAWINGS

Fig.1 gives a block schematic overview of the position and function occupied by the proposed cavity concepts in the digital radiography scanner,

Fig.2 is a side view of a first embodiment of the light-guiding cavity according to the present invention,

Fig.3 is a view of the light-guiding cavity of figure 2 seen from the emission point O,

Fig.4 shows how the special coating r1r2 can be applied,

Fig.5 is a geometrically modified embodiment of the light-guiding cavity of figure 2,

Fig.6 is a detailed drawing of the corner area of figure 5,

Fig.7 is an alternative embodiment of a light guiding cavity,

Fig.8 is an example of a photostimulable phosphor read out apparatus according to the present invention.

DETAILED DESCRIPTION OF THE DRAWINGS

The embodiments described hereafter support both static-spot stimulation and flying-spot stimulation.

In the case of static-spot stimulation, a two-dimensional relative scan motion between the storage medium and a compact stimulation and detection unit is involved.

In case of flying spot stimulation, a fast primary scan motion is executed in the stimulation path. This fast primary scan is supplemented by a relative sub-scan motion between the storage medium and the stimulation and detection unit.

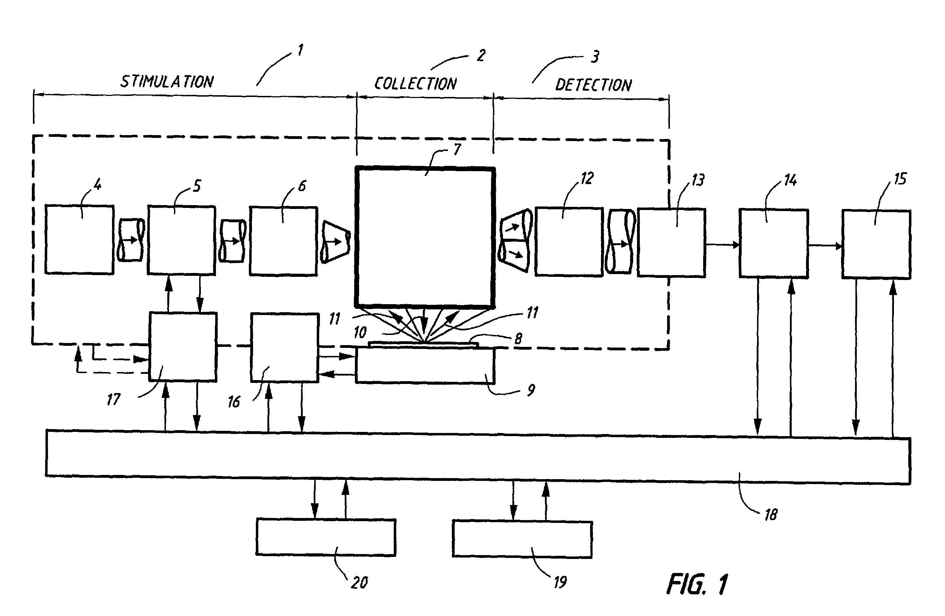

Figure 1 is a block schematic view of an example of a computed radiography system according to the invention. Figure 1 schematically shows the stimulation part 1, the light collection part 2 and the detection part 3 of the electro-optics chain of a read out apparatus according to the present invention.

The stimulation part 1 comprises a stimulation light source 4 such as a laser emitting stimulation light. This stimulation light is directed via optional beam deflection means 5 (e.g. a scanning mirror), optional beam focusing means 6 (e.g. an f$\vartheta$ lens) and via efficient light guiding means 7 according to the present invention, to an x-ray image storage medium 8 to be scanned. The x-ray storage medium is optionally provided on a carrier 9. The stimulating beam, which is schematically shown, is indicated by numeral 10.

Upon stimulation of the x-ray image storage medium by the stimulating beam 10, the medium emits image-wise modulated emission light, indicated by numeral 11. The light emitted upon stimulation is guided via spectral filtering means 12 onto photon detection means 13.

Signal processing may be applied to the detected signal in a signal-processing unit 14. The image may further be stored by image storage device 15.

A drive system is provided for controlling the scanning movement of the beam deflection means 5 and the x-ray image storage medium 8 reciprocally.

Two alternative drive systems providing two different types of scanning movement are shown in this schematic drawing. In case of a first drive system indicated by numeral 16 the x-ray image storage medium is supposed to be moved two-dimensionally relative to a stationary stimulation light source and stationary detector so as to obtain scanning of the medium.

In the second case a drive system 17 is provided for generating a fast scan movement by deflecting the stimulating light beam by means of beam deflection means 5 relative to the medium and for providing a subscan movement of the medium.

Figure 1 further also shows a control system 18 for controlling the operation of the above-described units or for controlling the data and control signal flow between several units that have already been mentioned as well as with a user interface 20 and /or external communication means 19.

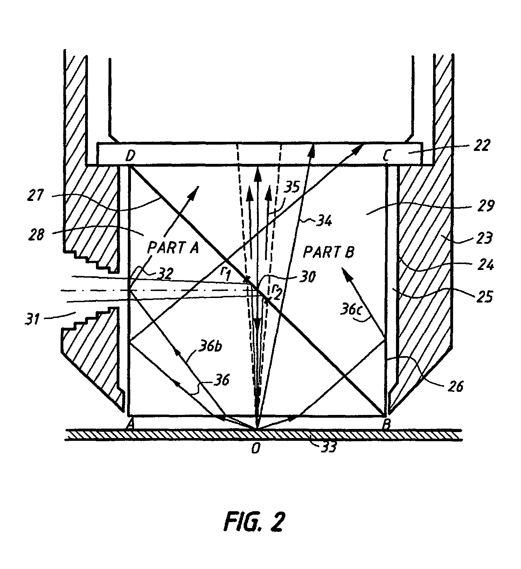

Figure 2 shows a cavity ABCD consisting of two optical materials each having a higher refractive index than the surrounding ambient air and which guide the stimulation light and, especially, the emission light with virtually no losses.

The cavity block is optically closely connected to an emission light filter 22 or to an optional light-guide system (not shown) which transports the photons to a remote emission light filter.

This filter 22 is in turn optically connected to a photodetector 23 (e.g. a photo multiplier tube or a solid state detector) or to an optional compound or simple light-guide system (not shown) that transports the photons to a remote photodetector. The assembly of cavity, filter, optional light-guide system and photodetector is mechanically connected by a closely fitting light-tight shield 24 with blackened internal walls 24'.

A thin air layer 25 separates the cavity walls 26 from the shield 24.

This enclosed assembly is arranged as close as possible (at a distance Dmin) to, and centred above, the stimulated emission point O on the storage medium in order to capture substantially all available emission photons in the detection cone AOB.

The cavity block consists of two diagonally bevelled (diagonal 27) and optically adhering blocks 28, 29, one of which has a special spectral coating 30 over at least the surface section rlr2 of the interface BD. This coating exhibits good reflection qualities for the stimulation light spectrum and extremely high transmission for the emission light spectrum. In this way, it becomes possible to bidirectionally combine the stimulation and emission light simultaneously within the same solid angle with respect to the point O, enabling photon detection within this energetically important spatial region.

Through an aperture 31 (in case of static stimulation explained higher) or an entrance slit (in case of dynamic stimulation explained higher) in the closely fitting case of the light-guiding cavity, the stimulation light enters laterally after refraction via the flat cavity wall 32.

After being reflected by the special coated surface r1r2, the stimulation beam is redirected towards the storage medium 33 and, after refraction, the beam leaves the cavity and is focused onto the storage medium.

The diffuse stimulated emission light proportional to the latent radiographic image leaves point O and, after refraction via the cavity plane AA*B*B, enters over a substantially hemispherical solid angle in the light collecting cavity.

The emission light will reach the filter and the photodetector via three possible paths inside the cavity.

Path 1: (indicated by numeral 34)

A first part of the refracted emission light after passage through via the diagonal plane DD*B*B transfers from cavity part A to cavity part B and propagates towards the filter. Optically spoken, the partition between both cavity parts is a purely virtual partition since the optical coupling between both cavity parts ensures substantially lossless light transfer.

Path 2: (indicated by numeral 35)

Another part of the refracted emission light impinges onto the spectrally selective coating surface r1r2 and transfers from cavity part A through the coating to cavity part B towards the filter with minimal transmission losses.

In the prior art this part of the emission light is lost because emission rays that are inside the stimulation spatial sector are not collected. Owing to the spectrally selective reflector coating, however, this spatial sector obtains a bidirectional optical function, making photon detection in this energetically interesting region possible.

Optically spoken, in one direction, the coating r1r2 serves as reflector for the stimulation light while in the other direction, for emission light, it is almost fully transparent or virtually non-existent.

Path 3: (indicated by numerals 36a, 36b, 36c)

The laterally radiated refracted emission light, which in the prior art is usually captured and redirected by lossy cavity reflectors, reaches the emission light filter after lossless total internal reflection (TIR) on the cavity side-walls at the surrounding air interface, and after passage through the coated or uncoated diagonal plane DD*B*B. By this means, the optical efficiency with which the collected light is reflected is increased considerably. Besides this TIR reflector function, the flat part of the side-wall serves as input window, providing access to the cavity for externally supplied stimulation light. Consequently, the plane of intersection with the lower refractive index gas or material fulfils a double optical function: light transmitter for the stimulation beam on the one hand, and lossless TIR reflector for internal cavity emission light on the other. The stimulation light is in effect laterally introduced through the emission light reflector without an aperture or slit in the cavity wall, and therefore without the associated collection efficiency losses due to solid angle gaps in the detection cone. Virtually lossless photon detection remains preserved within this spatial sector of the diffuse emission light sphere which improves the cavity efficiency.

The majority of the informationless stimulation light is scattered diffusely by the phosphor storage medium and, like the emission light, follows path 1 or path 3 in the cavity. The emission light filter ensures adequate optical absorption suppression of this informationless, reflected, stimulation light and provides efficient access to the photodetector for the information-carrying emission light.

A minority of the reflected stimulation light hits the coating and leaves the cavity at the side wall.

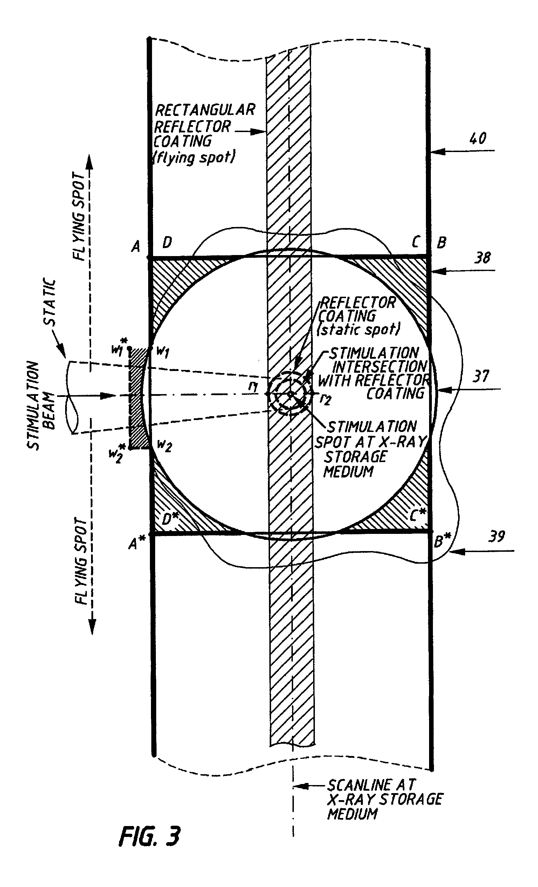

Fig.3 is a view of the light-guiding cavity from the emission point O.

For a static-spot stimulation wherein the storage medium has a two-dimensional relative displacement with respect to the stimulation head and scanning head, the shape of the light-guiding cavity can be designed to match the shape of the photodetector (or of the photosensitive area of the photodetector).

The cavity can be cylindrical (37), elliptical, square (38), polygonal, or any other free shape (39).

The diffuse emission light diverges while leaving the cavity at the upper side and the emission light filter has a finite, not negligible thickness.

Preferably, the optical cavity width (OCW) must be chosen so that it is smaller than the actual photosensitive area of the detector to avoid light leakage in between the cavity and the detector or light guide.

It is preferable that the surface along which the stimulation beam enters the cavity be flat to keep the stimulation light beam focused. This means that either non-flat cavity walls (such as for the cylindrical cavity) are preferably flattened at the entrance location (line part w1w2) or an optically coupled plano-cylindrical lens (indicated by w1w2w1*w2*) be added externally. The stimulation and detection system can be constructed as a combined, compact assembly.

The shape and size of the spectral reflector coating r1r2 is determined by the plane of intersection of the cavity diagonal with the stimulation light beam. Preferably, the coating surface is somewhat oversized to allow for beam adjustment and to compensate for positional tolerances.

The minimum coated diagonal plane r1r2 will have an elliptical shape (diagonal section of a cone) for a conical stimulation beam. The diagonal plane can also be completely coated.

For dynamic spot stimulation (flying-spot scanning), the shape of the cavity will be determined by the stimulation trajectory followed by the spot on the phosphor storage medium (primary scan motion). The output of the cavity block can also be optically connected to a simple or compound light-guide which transports the photons to the filter and photodetector. If a light-guide system is not used between the output of the light guiding cavity and the filter, the emission light filter and the spatially integrating photodetector will also have the shape of the stimulation trajectory. In most cases, the stimulation light trajectory is a straight line (scan line) and the light-guiding cavity will preferably have a rectangular cross section at a fixed distance above the storage phosphor medium.

Requirements and optimisations:

In order to ensure that there is always lossless TIR reflection of the refracted emission light for all the intercoupled rays within the cavity's spatial detection sector, the side-walls of the cavity are preferably perpendicular to the entrance plane AA*B*B. Alternatively they may diverge in the direction of the photodetector (opening conically).

The numerical aperture (N.A.) for emission light impinging onto the entry window of the cavity is preferably equal or larger than 1 so that the light guiding cavity has no acceptance cone (Acceptance solid angle = 180 degrees = a hemisphere).

$$\text{N.A.} \leq [(\text{refractive index of cavity})^2 - (\text{refractive index of ambient air})^2]^{1/2} \geq \sin \Pi/2 = 1.$$

(all incident rays are between 0 and 90 degrees to the normal with respect to the entry plane AA*B*B)

For a refractive index of ambient air = 1 this means that the refractive index of cavity $\geq 1.4142... (= 2^{1/2})$.

Example of possible cavity materials are glass (ri = 1.52), polymethyl methacrylate PMMA (ri = 1.49) whereby ri stands for refractive index, etc.

It is preferable to use for the optical cavity those materials whose refractive indices are substantially equal to prevent small reflection losses at the transition between successive optical materials.

The same is valid for the optical coupling between the cavity block, the (optional) filter, the (optional) light-guide and the photodetector for which it is best to use optical index matching adhesive.

An anti-reflex coating, applied to the cavity entrance plane AA*B*B, suppresses the reflection of the diffuse (owing to scattering by the storage medium) stimulation light between the storage medium and the cavity, reducing unintentional higher order stimulation and improves the transmission of emission light into the cavity.

The inside of the protective case around the light guiding cavity is preferably blackened to absorb reflected stimulation light which after collision with the coating r1r2 leaves the cavity laterally.

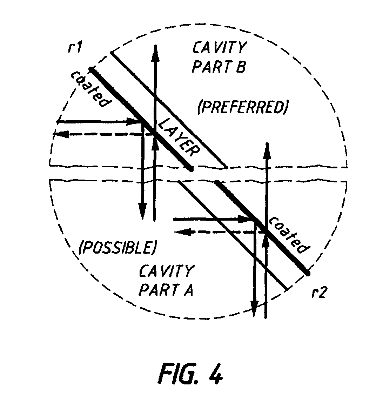

Fig.4 shows how the special coating r1r2 on the cavity part A can be applied for optimal optical quality in the reflected stimulation light beam. The spectral coating can also be applied to a thin glass plate that is optically connected to both cavity parts on both sides.

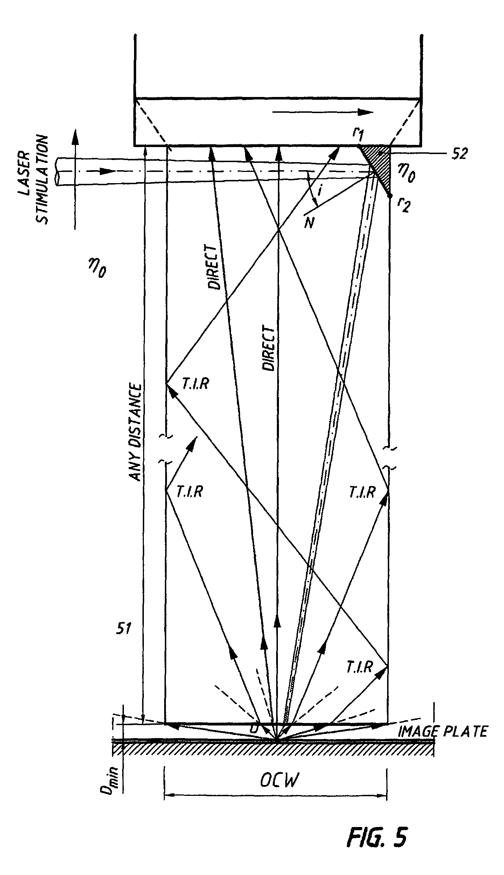

The arrangement shown in figure 5 is a geometrically modified embodiment of the above-described light-guiding cavity.

The cavity block consists of two diagonally bevelled ($r_1r_2$) and optically adhering blocks 51, 52 one of which has a special spectral coating over the surface section r1r2. This coating exhibits good reflection qualities for the stimulation light spectrum and extremely high transmission for the emission light spectrum.

This cavity can also be configured for static or dynamic stimulation and for compound or simple light-guide coupling to the emission light filter and the photodetector. For simplicity, the light-tight internally blackened case has been omitted in the drawings.

The purpose of this embodiment is to increase the distance between the supplied stimulation light beam and the phosphor storage medium so as to simplify the lateral introduction.

In this embodiment the diagonal intersection plane is substantially reduced to its reflector function and is shifted to the upper side edge of the cavity.

Only a small number of emission light rays passes the coated part on their path to the detector. A large part of the emission light reaches the filter or the optional light-guide component after one or more lossless total internal reflections on the side-walls of the cavity or makes a direct transit.

The angle $\beta$ must be equal to or smaller than $\Pi/2$ to guarantee total internal reflection for all emission light rays that reach the side-wall via the coating plane r1r2.

A small oversizing of this cavity part is advisable to avoid photons leakage near r2.

The inclination angle of the stimulation beam relative to the phosphor storage medium and the lateral introduction height can be increased by making the cavity block higher.

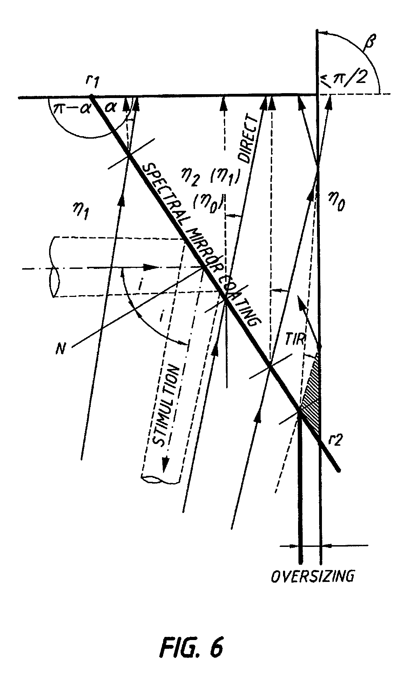

Figure 6 shows a simplified embodiment of this cavity, which is slightly less efficient, consists of a single cavity part onto which the coating r1r2 is applied. When leaving via the plane r1r2, emission light experiences a slight internal light reflection loss and is bent by refraction towards the detector (dashed rays in the sketch) before reaching the filter or the optional light-guide.

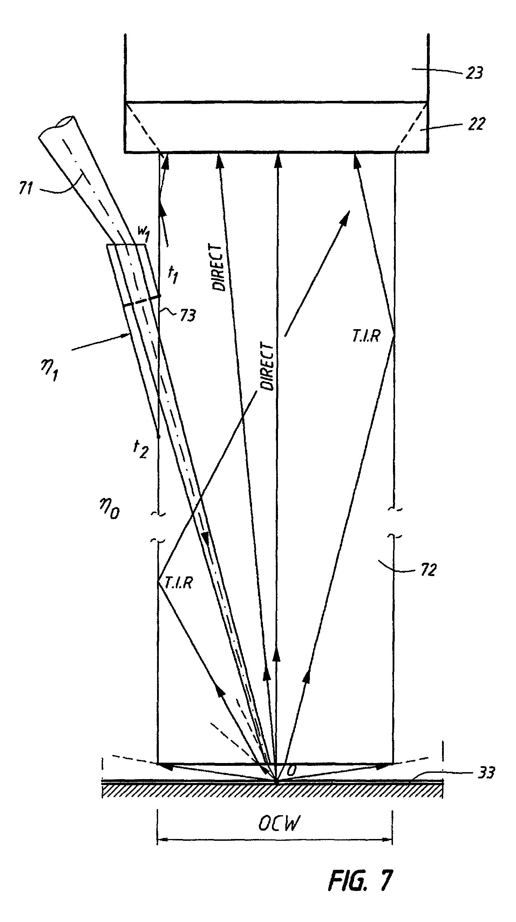

The alternative embodiment shown in figure 7 implements a light-guiding cavity with high optical efficiency in an extremely simple manner. This cavity too can be configured for static or dynamic stimulation and for compound or simple light-guide coupling to the emission light filter and the photodetector. For simplicity, the light-tight internally blackened case has been omitted in the drawings.

The assembled cavity now also consists of two parts which are closely optically connected to each other by a fully coated plane t1t2. The cylindrical (static stimulation) or wedge-shaped (dynamic stimulation) bevelled entry part 71 has the purpose of providing the externally supplied, acute, incident stimulation beam access to the storage medium 30 via the cavity 72 and without bending the beam direction.

The spectrally selective reflection coating 73 (t1t2) is optimised to combine the highest possible reflection of the emission light spectrum with good transmission of the stimulation light spectrum.

The actual light-guiding cavity is preferably monolithic and has a very simple shape. Refracted emission light mostly goes straight to, or via one or more lossless total internal reflections to the filter or to the optional light-guide system. A smaller part of the emission light in the spatial sector t1t2 is reflected with virtually no loss by the coated contact plane of the entry part and is redirected with high efficiency towards the detector, enabling emission light detection inside the stimulation light cone.

The inclination angle of stimulation onto the storage phosphor medium can be increased by increasing the height of the cavity block.

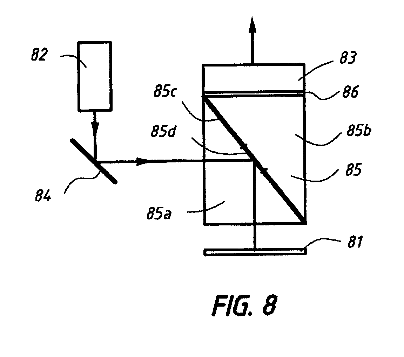

Figure 8 shows a radiation image read out apparatus according to the present invention for reading a radiation image that has been stored in a photostimulable phosphor screen 81.

The apparatus comprises a source of stimulating radiation 82 emitting stimulation light for stimulating phosphor screen 81 and a photodetector 83 arranged for detecting light emitted by phosphor screen 81 upon stimulation. The embodiment shown in figure 8 further comprises a mirror 84 for deflecting light emitted by source 82.

Light guiding means 85 are provided for guiding the light emitted by the phosphor screen 81 upon stimulation onto detector 83.

A filter 86 is provided for blocking any stimulation light from entering the detector 83.

The light guiding means 85 is a light guiding means comprises two bevelled blocks of optical material 85a, 85b. The blocks are adhered to eachother by the bevelled side 85c.

Part 85d of the interface between blocks 85a and 85b is coated with a coating that exhibits optimal reflection characteristics for the stimulation light, i.e. for the light emitted by light source 82 and optimal transmission characteristics for the light emitted by the phosphor screen 81 upon stimulation.

**Claims**

1. A light guiding means comprising
   a light guiding optical cavity consisting of at least one block (28) of optical material the refractive index of which is higher than that of the medium surrounding it,
   wherein said block of optical material (28) comprises an area (30) that reflects light of a first wavelength and transmits light of a second wavelength.

2. A light guiding means according to claim 1 wherein

   - said optical cavity comprises at least two blocks (28, 29) of optical materials guiding light of a first and a second wavelength, each of said blocks having a refractive index that is higher than that of the material surrounding the cavity,
   - said blocks each having a bevelled side (27),
   - and said blocks being optically adhered to eachother by the bevelled sides,
   - at least part of the area of interface between said blocks reflects a first wavelength and transmits a second wavelength.

3. A light guiding means according to claim 2 wherein at least part of said bevelled sides are provided with a coating (30) reflecting light of a first wavelength and transmitting light of a second wavelength.

4. A light guiding means according to claim 1 comprising a single block of optical material guiding light of a first and second wavelength and having a refractive index that is higher than that of the material surrounding the cavity, said block having a bevelled outer side at least part of which reflects light of a first wavelength and transmits light of a second wavelength.

5. A light guiding means according to claim 4 wherein said bevelled outer side is at least partially covered with a coating reflecting light of a first wavelength and transmitting light of a second wavelength.

6. A light guiding means according to claim 1 comprising
a block of optical material having a refractive index that is higher than that of the medium surrounding the cavity, an entry part (71) composed of an optical material, said entry part being adhered to the outer face of said block of optical material and being arranged to guide light of a first wavelength entering said entry part to said block of optical material,
wherein at least part of the area of interface (73) between said entry part and said block of optical material transmits light of said first wavelength and reflects light of a second wavelength.

7. A light guiding means according to claim 6 wherein said area of interface is at least partially coated with a coating that transmits light of said first wavelength and reflects light of a second wavelength.

8. A light guiding means according to any of the preceding claims wherein said optical cavity is optically coupled to an optical filter (22) transmitting light of said second wavelength and substantially blocking light of said first wavelength.

9. A light guiding means according to any of the preceding claims wherein the side-walls of the cavity are perpendicular to the plane wherein said light of a second wavelength enters the cavity.

10. A light guiding means according to any of the preceding claims wherein the side-walls of the cavity diverge in the direction in which the light of the second wavelength is guided.

11. A light guiding means according to any of the preceding claims wherein the numerical aperture of the cavity for light of said second wavelength is equal to or greater than 1.

12. A light guiding means according to any of the preceding claims wherein a protective case (24) is provided around said cavity and wherein the inside (24') of said case absorbs light of a first wavelength.

13. A light guiding means according to any of the preceding claims wherein said protective case (24) has an opening for transmitting light of said first wavelength.

14. A light guiding means according to claim 13 wherein said opening is an elongate slit.

15. A light guiding means according to any of the preceding claims wherein the shape of the cavity is adapted to the shape of the entrance window of a photodetector (23).

16. A radiation image read out apparatus for reading a radiation image that has been stored in a photostimulable phosphor screen (81) comprising

- a source of stimulating radiation (82) emitting stimulation light for stimulating said phosphor screen,
- a photodetector (83) arranged for detecting light emitted by said phosphor screen upon stimulation,
- light guiding means (85) for guiding the light emitted by said phosphor screen (81) upon stimulation onto said detector (83),
- wherein said a light guiding means is a light guiding means in accordance with claim 1 and wherein the light of first wavelength is said stimulation light and the light of said second wavelength is the light emitted by said phosphor upon stimulation and

wherein said light of a first wavelength is directed towards said coating.

FIG. 1

EP 1 221 631 A1

FIG. 2

EP 1 221 631 A1

FIG. 3

RECTANGULAR REFLECTOR COATING (flying spot)
FLYING SPOT
STATIC
STIMULATION BEAM
FLYING SPOT
40
38
REFLECTOR COATING (static spot)
STIMULATION INTERSECTION WITH REFLECTOR COATING
STIMULATION SPOT AT X-RAY STORAGE MEDIUM
37
39
SCANLINE AT X-RAY STORAGE MEDIUM
A D C B
$w_1^*$ $w_1$ $r_1$ $r_2$ $w_2^*$ $w_2$
D* C*
A* B*

FIG. 4

FIG. 5

FIG. 6

**FIG. 7**

FIG. 8

European Patent
Office

# EUROPEAN SEARCH REPORT

Application Number

EP 01 00 0001

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br>A | EP 0 144 856 A (FUJI PHOTO FILM CO LTD) 19 June 1985 (1985-06-19)<br>* abstract *<br>* page 3, line 1 - line 11 *<br>* page 5, line 14 - line 19 *<br>* page 6, line 9 - line 21 *<br>* page 8, line 21 - page 9, line 12 *<br>* page 15, line 4 - line 21 *<br>* page 16, line 7 - page 17, line 6 *<br>* page 20, line 3 - line 11 *<br>* page 20, line 20 - page 21, line 10 *<br>* figures 1-3,6,8 * | 1-9,11, 15<br><br>14 | G02B27/14<br>H04N1/028<br>G01T1/20 |
| A | EP 0 527 691 A (EASTMAN KODAK CO) 17 February 1993 (1993-02-17)<br>* figure 3 * | 10,12,13 | |

|  |
|---|
| TECHNICAL FIELDS SEARCHED (Int.Cl.7) |
| G02B<br>H04N<br>G01T |

The present search report has been drawn up for all claims

| Place of search | Date of completion of the search | Examiner |
|---|---|---|
| THE HAGUE | 12 July 2001 | Verdoodt, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

**ANNEX TO THE EUROPEAN SEARCH REPORT
ON EUROPEAN PATENT APPLICATION NO.**    EP 01 00 0001

This annex lists the patent family members relating to the patent documents cited in the above-mentioned European search report.
The members are as contained in the European Patent Office EDP file on
The European Patent Office is in no way liable for these particulars which are merely given for the purpose of information.

12-07-2001

| Patent document cited in search report | | Publication date | Patent family member(s) | | Publication date |
|---|---|---|---|---|---|
| EP 0144856 | A | 19-06-1985 | JP | 60111238 A | 17-06-1985 |
| | | | DE | 3476924 D | 06-04-1989 |
| | | | US | 4564760 A | 14-01-1986 |
| EP 0527691 | A | 17-02-1993 | US | 5125013 A | 23-06-1992 |
| | | | DE | 69209929 D | 23-05-1996 |
| | | | DE | 69209929 T | 28-11-1996 |
| | | | JP | 6230680 A | 19-08-1994 |

EPO FORM P0459

For more details about this annex : see Official Journal of the European Patent Office, No. 12/82